# EUROPEAN PATENT APPLICATION

(11) **EP 3 018 293 A1**
(43) Date of publication of application: **11.05.2016**
(21) Application number: 15184454.5
(22) Date of filing: 09.09.2015
(51) Int. Cl.: F01D 5/28, B29C 70/24, B29D 99/00, B29L 31/08

(54) **COMPOSITE ARTICLE WITH FIBRE-REINFORCED SANDWICH CORE**

(30) Priority: 08.10.2014 GB 201417769
(71) Applicant: Rolls-Royce plc, London SW1E 6AT (GB)
(72) Inventor: Khan, Bijoysri, Derby, Derbyshire DE24 8BJ (GB)
(74) Representative: Rolls-Royce plc

(57) **Abstract**

The present invention provides an article comprising a core of a core composite material sandwiched between opposing skins formed of a skin composite material. The opposing skins are separated by said core in a through-thickness (z) direction of the article. The skin composite material comprises skin fibres aligned in a plane, the plane being orthogonal to the through-thickness direction. The core composite material comprises core fibres having an extension in a direction extending between said opposing skins. The core composite material may be a 3D composite material or may comprise a laminated stack of Pre-cured Profile Cut flat Laminate (PPCL) sheets.

## Description

### Field of the Invention

The present invention relates to an article formed of a composite material. In particular, the present invention relates to an article, such as a fan blade or a cantilevered beam for a gas turbine engine, formed by a fibre-reinforced composite material such as fibre-reinforced plastics material.

### Background of the Invention

Composite materials typically comprise a matrix and a reinforcement. The matrix may be a plastics material such as an epoxy resin or a thermoplastic. The reinforcement may be fibrous and may comprise carbon fibres, glass fibres or aramid fibres (or mixtures thereof). Forming the composite material typically involves combining the matrix and reinforcement and then curing the matrix (e.g. by heat or chemical reaction) to bind the reinforcement in a rigid or semi-rigid structure. Resin transfer moulding, compression moulding, injection moulding or sheet moulding are typically used to form the composite into the desired shape.

2D composites contain fibres aligned along a plane in two orthogonal (x, y) directions. 3D composites contain fibres arranged into a 3-dimensional structure with fibres extending in a through-thickness (z) direction.

These composites are typically formed by layering, weaving, braiding or knitting the fibres.

Articles formed of 2D composite materials are prone to inter-laminar delamination or shear failure under bending. This is problematic for articles such as fan blades in gas turbine engines which are subjected to significant shear stress during use. The shear stress profile in a composite beam resembles a truncated parabola where the maximum shear stress, generally, extends through the central third of the through-thickness of the beam. The maximum shear strength is matrix dependent and determines the load bearing capability of the beam.

The maximum shear strength is greater in 3D composites than 2D composites (owing to the presence of z-direction fibres in 3D composites) but 3D composites have a reduced in-plane tensile strength (in the x-y directions) arising from the localised waviness of the fibres.

To enhance the inter-laminar shear strength in 2D composites, it is known to use techniques such as stitching, z-pinning or tufting, all of which involve the insertion of reinforcing fibres or pins extending in the z-direction of the composite material. However, these techniques all have a detrimental effect on the in-plane (x-y plane) tensile strength of the composite material due to the crimp in the fibres that is introduced at the sites where the pins/fibres are inserted. In the case where pins are hammered into the composite, damage can be caused to the fibres by the passage of the pins. Where such additional stitching or pin insertion is used in 3D woven structures, similar fibre damage can be caused.

The present invention aims to provide an article formed of a fibre-reinforced composite material which combines an optimised through-thickness inter-laminar shear strength and an optimised in-plane tensile strength.

### Summary of the Invention

In a first aspect, the present invention provides an article comprising a core of a core composite material sandwiched between opposing skins formed of a skin composite material, wherein:
the opposing skins are separated by said core in a through-thickness direction of said article;
the skin composite material comprises skin fibres aligned in a plane, the plane being orthogonal to said through-thickness direction; and
the core composite material comprises core fibres having an extension in a direction extending between said opposing skins.

In a second aspect, the present invention provides a method of manufacturing an article, said method comprising sandwiching a core of a core composite material between opposing skins formed of a skin composite material, such that the opposing skins are separated by said core in a through-thickness direction of said article, wherein:
the skin composite material comprises skin fibres aligned in a plane, the plane being orthogonal to said through-thickness direction; and
the core composite material comprises core fibres having an extension in a direction extending between said opposing skins.

By providing an article having opposing skins with fibres aligned in a plane that is orthogonal to the through-thickness direction of the article and a core having fibres extending in a direction between said opposing skins, both the inter-laminar shear strength and the in-plane tensile/compressive strength can be optimised. The core fibres are provided in the area where maximum shear stress is concentrated, and thus the inter-laminar shear strength of the article is maximised allowing increased bending without delamination. The fibres in the skins provide an increased in-plane tensile/compressive strength during bending.

Optional features of the invention will now be set out. These are applicable singly or in any combination with any aspect of the invention.

The through-thickness direction is the direction extending between the opposing skins and is typically referred to as the z-direction. Consequently, the plane in which the skin fibres are aligned can be considered to be an x, y plane since it is orthogonal to the z-direction.

The opposing skins can be considered to be a 2D composite material since they each contain skin fibres aligned in the x, y plane. One or both of the opposing skins may comprise at least one respective layer in which the skin fibres extend in the x direction thus being aligned in the y direction. One or both of the opposing skins may comprise at least one respective layer in which the skin fibres extend in the y direction thus being aligned in the x direction. One or both of the opposing skins may comprise at least one respective layer in which the skin fibres extend at an angle e.g. at an angle of ±22 degrees, ± 30 degrees, ±45 degrees and/or ±60 degrees to the x-direction.

In some embodiments, one or both of the opposing skins may comprise at least one respective layer in which the skin fibres extend in both the x and y directions. For example, the skin fibres in said layer may be woven, interleaved or knitted. The method may comprise forming the skin composite material by weaving, interleaving or knitting skin fibres and/or forming the article using skin composite material comprising woven, interleaved or knitted skin fibres.

At least some of the skin fibres in one or both of the opposing skins may be formed into braided tapes, sheets or wraps in one or both of the opposing skins. The method may comprise forming the skin composite material by braiding skin fibres and/or forming the article using skin composite material comprising braided skin fibres. In some embodiments the braided fibres are provided in one or more layers proximal the outer surfaces of the or each opposing skin.

In some embodiments, one or both of the opposing skins comprises a respective plurality of laminated sheets of 2D composite material, the laminated sheets in each skin stacked upon each other. The method may comprise forming a plurality of sheets of 2D composite material and laminating them together to form the opposing skins.

One or more of the laminated sheets in one or both of the opposing skins may be a unidirectional (UD) sheet with fibres extending in the x-y plane in the x-direction. One or more of the laminated sheets in one or both of the opposing skins may be a unidirectional (UD) sheet with fibres extending in the x-y plane in the y-direction. One or more of the laminated sheets in one or both of the opposing skins may be a unidirectional (UD) sheet with fibres extending in the x-y plane at an angle to the x-direction e.g. at an angle of ±22 degrees, ± 30 degrees, ±45 degrees and/or ±60 degrees to the x-direction.

In some embodiments, one or both of the opposing skins may be reinforced in the through-thickness direction e.g. by tufting.

In some embodiments, the core of composite material extends at least across the central third of the through-thickness (z) direction of the article.

In some embodiments, one or both of the opposing skins extend approximately a third of the through-thickness (z) direction of the article.

In some embodiments, one or both of the opposing skins may extend to cover the or each longitudinal and/or transverse edges of the core i.e. the core may be partially or completely enclosed within said opposing skins.

The skin fibres may be formed, for example, of carbon, glass, boron, aramid, silicon carbide or mixtures thereof, aligned in an x, y plane within a matrix (e.g. a polymeric, metallic or ceramic matrix). For example, the skin composite material may be a fibre-reinforced plastics (FRP) material.

The core fibres have an extension in a direction extending between the opposing skins. They may or may not span the entire core between the opposing skins. The core fibres may extend in a direction that is between 30 and 90 degrees to the opposing skins. Where they extend at 90 degrees to the opposing skins, they will extend in the through-thickness (z) direction.

In some embodiments, the core composite material is a 3D composite material and the method comprises forming the core of 3D composite material. The 3D composite contains core fibres (e.g. fibres formed of carbon, glass, boron, aramid, silicon carbide or mixtures thereof) extending in three orthogonal directions within a matrix (e.g. a polymeric, metallic or ceramic matrix) e.g. the core composite material may be a FRP material. The 3D composite may be a 3D woven composite and the method may comprise forming the core composite material by weaving core fibres and/or forming the article using core composite material comprising woven core fibres.

The 3D woven composite may contain warp core fibres extending substantially in the y-direction (parallel to the opposing skins) and aligned in the x- and through-thickness (z) directions. The woven 3D composite may contain weft core fibres extending substantially in an x-direction (also parallel to the opposing skins) and aligned in the y- and through-thickness (z) directions.

In some embodiments, the 3D woven core composite material contains binder warp core fibres which extend in a direction between the opposing skins and in a direction perpendicular to the through-thickness direction (e.g. in the x-direction). They may extend in a substantially zig-zagged path (e.g. forming interlinked square-based or triangle-based pyramids) through the core to form a truss structure to further increase the shear/torsional strength. In these embodiments, the method comprises forming a truss structure of zig-zagged binder warp core fibres within the core.

In some embodiments, the article comprises angular tufting fibres extending e.g. in a zig-zagged path, through both opposing skins and the core. This increases the integrity of the article and yet further increases the shear/torsional strength. In these embodiments, the method comprises passing angular tufting fibres through the core and opposing skins e.g. in a zig-zagged path.

In some embodiments, the core composite material comprises a laminated stack of core sheets, each core sheet containing core fibres (e.g. fibres formed of carbon, glass, boron or silicon carbide) extending in the through-thickness (z) direction within a matrix (e.g. a polymeric, metallic or ceramic matrix) e.g. the core composite material may be a FRP material. The core sheets are stacked in a direction orthogonal to the skin fibres. For example, the core sheets may be stacked in the x direction (i.e. with the fibres extending in the z direction and aligned in the y direction).

In these embodiments, the method comprises providing a plurality of core sheets, stacking the core sheets in a direction orthogonal to the direction of the skin fibres and laminating the stack.

In some embodiments, each of the stacked core sheets contains unidirectional fibres extending in the through-thickness (z) direction. This enhances compressive/tensile strength in the z-direction.

In some embodiments, each of the stacked core sheets in a pre-cured profile cut flat laminate (PPCL).

The 2D composite opposing skins may also be formed of PPCL but stacked in the through thickness (z) direction i.e. stacked orthogonally to the core sheets.

The stack of core sheets may be bound at its outer surface with one or more wrapping fibres which may be wrapped/wound or braided around the stack. In these embodiments, the method comprises winding, wrapping or braiding one or more wrapping fibres around the stack of laminated core sheets. The stack of core sheet may by additionally or alternatively wrapped using reinforcing fabric material.

In some embodiments, the core comprises a plurality of sections with each section bound at its outer surface with one or more wrapping fibres which may be wrapped/wound or braided around the section. Each section may by additionally or alternatively wrapped using reinforcing fabric material. This helps to contain any delamination failure to the affected section.

The core may comprise plurality of laminated stacks of core sheets and each of the plurality of stack of core sheets may be bound at its respective outer surface with one or more wrapping fibres which may be wrapped/wound or braided around the stack. This helps to contain any delamination failure to the affected stack.

Adjacent laminated stacks may be affixed to each other e.g. by adhesive, by co-curing of the matrix material of adjacent stacks or by heat-bonding if using a thermoplastic matrix material. Toughening or damping layers may additionally or alternatively be included between adjacent laminated stacks to improve load transfer therebetween.

Accordingly, in some embodiments, the method comprises joining a plurality of laminated stacks of core sheets using an adhesive and/or dampening layer.

In some embodiments, the article is an aerofoil component, a cantilever beam, a flat beam, a wedge, a rod, a tube or a casing.

In a third aspect, the present invention provides a gas turbine engine comprising an article according to the first aspect and/or manufactured according to the second aspect.

### Brief Description of the Drawings

Embodiments of the invention will now be described by way of example with reference to the accompanying drawings in which:
Figure 1 shows a cross-section through a first embodiment of the present invention;
Figure 2 shows a cross-section through a second embodiment of the present invention; and
Figures 3A - 3E show the formation of a cantilever beam according to the second embodiment of the present invention.

### Detailed Description and Further Optional Features of the Invention

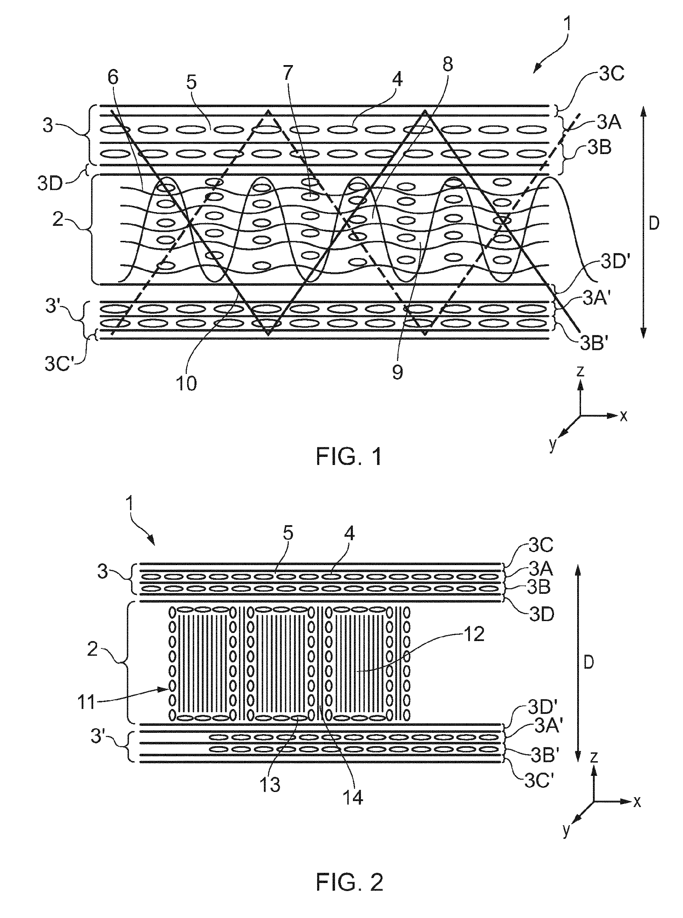

Figure 1 shows a first embodiment of the present invention. The article 1 comprises a core 2 of a core composite material sandwiched between opposing skins 3, 3' formed of a skin composite material.

The opposing skins 3, 3' are separated by the core 2 in a through-thickness direction D of the article. The through-thickness direction D is the z direction extending between the opposing skins 3, 3'.

The skin composite material of the opposing skins 3, 3' is a 2D composite material comprising skin fibres 4 formed of carbon, glass, boron, aramid or silicon carbide and aligned in an x, y plane, the x, y plane being orthogonal to the through-thickness (z) direction D. The skin fibres 4 are unidirectional and extend in the y direction. The skin fibres 4 are braided into braided tapes and held within a plastic skin matrix material 5.

Each of the opposing skins 3, 3' comprises a respective plurality of laminated sheets 3A, 3B, 3C, 3D, 3A', 3B', 3C', 3D' of 2D composite material, the laminated sheets in each skin stacked upon each other in a through-thickness (z) direction D.

Some of the laminated sheets 3A, 3B, 3A', 3B' are UD sheets containing fibres extending in the x-y plane in the y direction. Some of the laminated sheets 3C, 3D, 3C', 3D' are UD sheets containing fibres extending in the x-y plane in the x direction. There may also be other UD sheets (not shown) contained within the opposing skins having fibres extending at an angle to the x-direction e.g. at an angle of ±22 degrees, ± 30 degrees, ±45 degrees and/or ±60 degrees to the x-direction. The fibres in the sheets 3C, 3C' proximal the outer surface of the opposing skins are braided to provide reinforcement to the article.

Each of the opposing skins 3, 3' has a thickness in the through-thickness direction D that extends approximately one third of the thickness of the article.

The core composite material forming the core 2 comprises a 3D woven composite material having weft core fibres 6 (extending in the x direction), warp core fibres 7 (extending in the y-direction) and core fibres, having an extension in a direction extending between said opposing skins 3, 3', which include binder warp core fibres 8 which extend in a substantially zig-zagged path through the core to form a truss structure. The core fibres 6, 7, 8 are formed of carbon, glass, boron, aramid or silicon carbide and held within a plastic core matrix material 9.

By providing an article 1 having opposing skins 3, 3' with skin fibres aligned in a plane that is orthogonal to the through-thickness direction D of the article 1 and a core 2 having core fibres extending in a direction between said opposing skins 3, 3', both the inter-laminar shear strength and the in-plane tensile/compressive strength can be optimised. The core fibres 6, 7, 8 are provided in the area where maximum shear stress is concentrated, and thus the inter-laminar shear strength of the article 1 is maximised allowing increased bending without delamination. The skin fibres 4 provide an increased in-plane tensile/compressive strength during bending.

The core 2 of composite material extends at least across the central third of the through-thickness (z) direction D of the article 1.

The article 1 further comprises angular tufting or stitching fibres 10 extending in a zig-zagged path, through both opposing skins and the core. This increases the integrity of the article and yet further increases the shear/torsional strength.

Figure 2 shows a second embodiment of the present invention.

The opposing skins 3, 3' are described above for the first embodiment.

The core composite material forming the core 2 comprises a plurality of laminated stacks 11 of Pre-cured Profile Cut flat Laminate (PPCL) core sheets 12, each core sheet 12 containing core fibres extending in the through-thickness (z) direction D. The core sheets 12 are stacked in the x-direction orthogonal to the skin fibres 4 with the core fibres (not visible in Figure 2) extending in the through-thickness (z) direction D and aligned in the y direction.

Each stack 11 of core sheets 12 is bound at its outer surface with one or more wrapping fibres 13 which are wrapped/wound or braided around the respective stack 11.

The plurality of laminated stacks 11 of core sheets 12 are affixed to each other by an adhesive layer 14, by co-curing of the matrix material of adjacent stacks or by heat-binding if using a thermoplastic matrix material. Toughening or damping layers may additionally/alternatively be included between adjacent laminated stacks to improve load transfer therebetween.

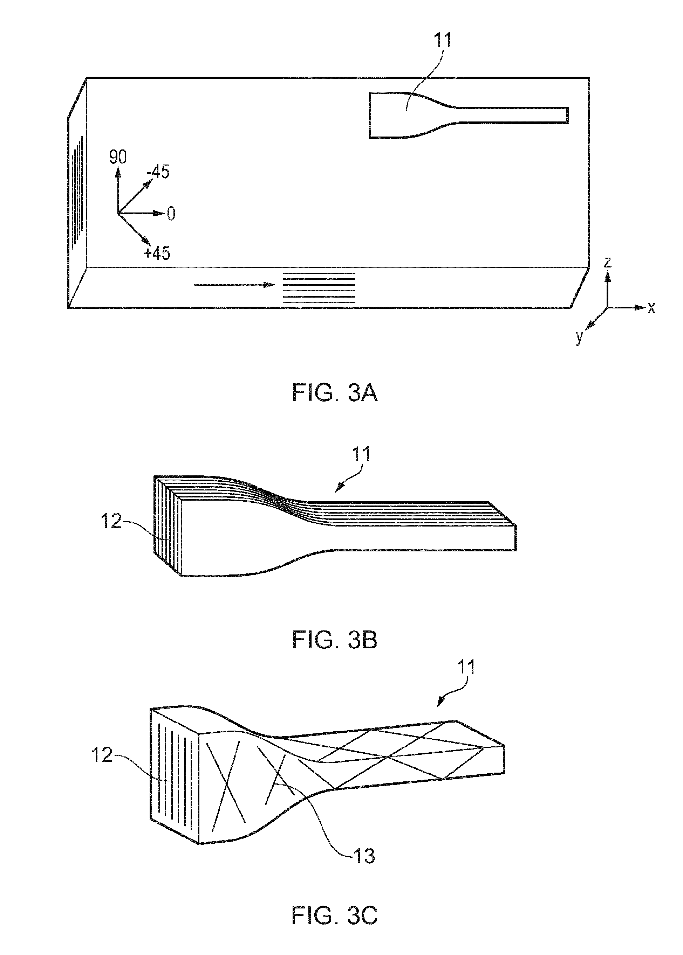

Figures 3A to 3E show steps in the manufacture of a cantilever beam according to the second embodiment.

As shown in Figure 3A, a plurality of pre-cured profile cut flat laminate (PPCL) core sheets 12 containing unidirectional core fibres (not shown) are stacked one upon another. A core section comprising a shaped laminated stack 11 is punched or cut out of the sheet ensuring that the core fibres are aligned in the through thickness direction D of the article 1. The core section is shown in Figure 3B with the core sheets 12 aligned in the y, z plane.

As shown in Figure 3C, the outer surface of the core section 11 is overwound or braided with a wrapping fibre 13 to encapsulate and reinforce the core section 11.

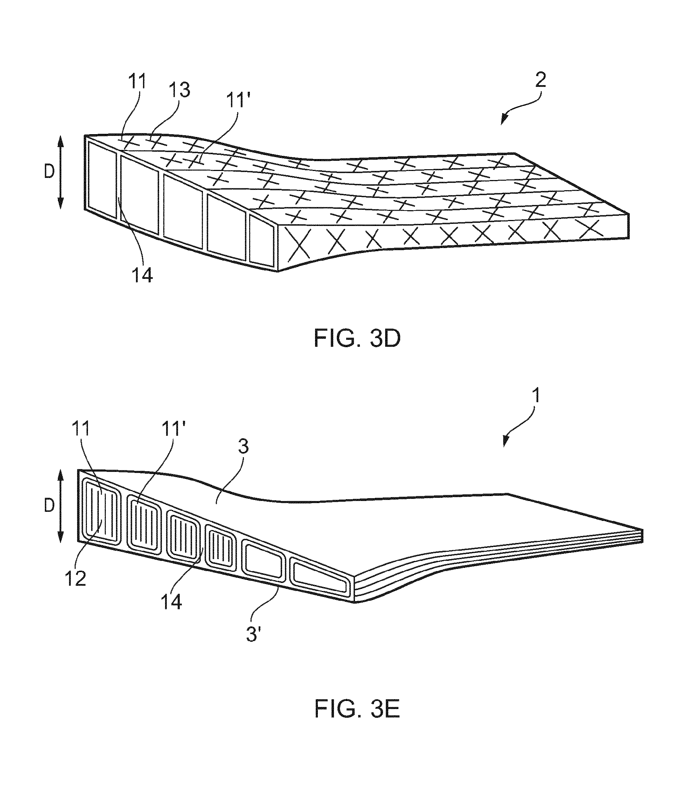

Next, as shown in Figure 3D, the core section 11 is adjoined to an adjacent core section 11' using adhesive, or by co-curing of the matrix material of adjacent stacks or by heat bonding if using a thermoplastic matrix material. The adjacent core section 11' (which is formed in the same manner as the core section 11) is affixed to a further adjacent core section (also formed in the same manner as the core section 11) to build up the core 2 of the article 1.

Finally, and as shown in Figure 3E, opposing skins 3, 3' are affixed to the core 2.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. An article comprising a core (2) of a core composite material sandwiched between opposing skins (3, 3') formed of a skin composite material, wherein:
the opposing skins are separated by said core in a through-thickness direction of said article;
the skin composite material comprises skin fibres (4) aligned in a plane, the plane being orthogonal to said through-thickness direction; and
the core composite material comprises core fibres (6, 7) having an extension in a direction extending between said opposing skins.

2. An article according to claim 1 wherein one or both of the opposing skins comprises at least one respective layer in which the skin fibres extend in two orthogonal directions.

3. An article according to claim 1 or claim 2 wherein one or both of the opposing skins contains at least one layer proximal a respective outer surface of the skin with skin fibres that are formed into braided tapes.

4. An article according to any one of the preceding claims wherein the core fibres extend in a direction that is between 30 and 90 degrees to the opposing skins.

5. An article according to any one of the preceding claims wherein the core composite material is a 3D composite material containing core fibres extending in three orthogonal directions.

6. An article according to claim 5 wherein the 3D core composite material contains binder warp core fibres (8) which extend in a zig-zagged direction between the opposing skins.

7. An article according to any one of the preceding claims comprising angular tufting fibres (10) extending in a zig-zagged path through both opposing skins and the core.

8. An article according to any one of claims 1 to 4 wherein the core composite material comprises a laminated stack (11) of core sheets (12), each core sheet containing core fibres extending in the through-thickness (z) direction.

9. An article according to claim 8 wherein each of the stacked core sheets contains unidirectional fibres extending in the through-thickness (z) direction.

10. An article according to claim 8 or claim 9 wherein the laminated stack of core sheets is bound at its outer surface with one or more wrapping fibres (13).

11. An article according to any one of claims 8 to 10 wherein the core comprises a plurality of laminated stacks of core sheets.

12. An article according to claim 11 wherein the core comprises a respective adhesive (14) or damping layer between adjacent laminated stacks of core sheets.

13. An article according to any one of the preceding claims wherein the article is a component of a gas turbine engine.

14. A method of manufacturing an article according to any one of the preceding claims, said method comprising sandwiching a core of a core composite material between opposing skins formed of a skin composite material, such that the opposing skins are separated by said core in a through-thickness direction of said article, wherein:
the skin composite material comprises skin fibres aligned in a plane, the plane being orthogonal to said through-thickness direction; and
the core composite material comprises core fibres having an extension in a direction extending between said opposing skins.

15. A gas turbine engine comprising an article according to any one of claims 1 to 13.
